# EUROPÄISCHE PATENTSCHRIFT

(11) **EP 1 882 930 B1**
(45) Veröffentlichungstag und Bekanntmachung des Hinweises auf die Patenterteilung: **04.01.2017**
(21) Anmeldenummer: 07008614.5
(22) Anmeldetag: 27.04.2007
(51) Int. Cl.: G01N 27/22

(54) **Schaltungsanordnung und Verfahren zur Feuchtemessung**
Circuit and method for measuring humidity
Circuit et procédé destinés à la mesure de l'humidité

(30) Priorität: 28.07.2006 DE 102006034931
(43) Veröffentlichungstag der Anmeldung: 30.01.2008
(73) Patentinhaber: E+E ELEKTRONIK GES.M.B.H., 4209 Engerwitzdorf (AT)
(72) Erfinder: Nikolaus, Gerhard, 4209 Engerwitzdorf (AT)
(74) Vertreter: Hofmann, Ernst

(56) Entgegenhaltungen:
- EP-A1- 1 411 349
- GB-A- 2 344 422
- US-A- 4 426 616
- US-A- 5 418 466
- US-A- 5 483 172

## Beschreibung

Die Erfindung betrifft eine Schaltungsanordnung zur Messung der Luftfeuchtigkeit, sowie ein Verfahren zur Messung der Luftfeuchtigkeit mit einer derartigen Schaltungsanordnung nach den Ansprüchen 1 und 6.

Für die Messung der Luftfeuchtigkeit, wie beispielsweise in der Klimatechnik zur Steuerung eines Raumklimas, werden hauptsächlich kapazitive Feuchtigkeitssensoren eingesetzt. Meist handelt es sich dabei um Dünnschichtsensoren, deren Messgröße die feuchteabhängige Kapazität der Polymerschicht zwischen den Elektroden ist. Sensoren dieser Art sind beispielsweise in H.-R. Tränkler, E. Obermeier: "Sensortechnik, Handbuch für Praxis und Wissenschaft", Springer Verlag, 1998, Seiten 1247 bis 1250 beschrieben.

Um die Kapazität des Sensors messen zu können, werden häufig Oszillatorschaltungen eingesetzt, in denen der kapazitive Sensor das frequenzbestimmende Glied ist. Dabei kann ein Wert für die Luftfeuchtigkeit einfach dadurch ermittelt werden, dass die Oszillatorfrequenz gemessen und dem Ergebnis der Messung ein Feuchtewert zugeordnet wird. Beispiele für derartige Schaltungen auf dem Gebiet der Feuchtemessung sind unter anderem in H. Lemme: "Sensoren in der Praxis", Franzis-Verlag, 1993, Seiten 327 bis 336 zu finden.

Die US 5,844,138 beschreibt eine Vorrichtung zur Feuchtemessung, bei der ein kapazitiver Feuchtesensor das frequenzbestimmende Element eines Oszillators ist. Die aktuelle Luftfeuchtigkeit wird durch Messung der Oszillatorfrequenz und deren Umrechnung in einen Feuchtewert mit Hilfe von Kalibrierdaten, die in einer Speichereinheit abgespeichert sind, ermittelt.

Besonders in industrieller Umgebung treten am kapazitiven Feuchtesensor, hervorgerufen durch Verschmutzung der Sensoranschlüsse oder durch Materialeigenschaften des Sensors selbst, parasitäre Parallelwiderstände auf, die ebenfalls die Oszillatorfrequenz der Messschaltung beeinflussen und dadurch das Messergebnis verfälschen. Derartige Veränderungen der an den Oszillator angeschlossenen Impedanz werden von der US 5,844,138 nicht berücksichtigt.

Der Messfehler, der durch die Parallelschaltung eines parasitären Widerstands zum kapazitiven Feuchtesensors entsteht, kann korrigiert werden, wenn nicht nur die Kapazität, sondern die Impedanz des Messfühlers gemessen wird, da dann auch eine Phaseninformation mit erfasst wird und der vom parasitären Parallelwiderstand hervorgerufene Fehler eliminiert werden kann. Schaltungsanordnungen zur Impedanzmessung sind aber recht aufwendig und kostenintensiv.

Die EP1411349A1 beschreibt ein Verfahren zur Erfassung der Luftfeuchtigkeit, bei dem die Lade- und/oder Entladedauer eines kapazitiven Feuchtesensors über zwei verschiedene Messwiderstände erfasst wird und aus den Ergebnissen die Kapazität des Sensors errechnet wird. Der kapazitive Sensor wird dabei durch eine Parallelschaltung eines idealen Kondensators mit einem ohmschen Widerstand modelliert, wobei sowohl der Widerstandswert, als auch der Kondensatorwert von der Feuchte und der Temperatur abhängig sind.

Es ist Aufgabe der Erfindung, eine Schaltungsanordnung zur Messung der Luftfeuchtigkeit mit einem kapazitiven Feuchtesensor anzugeben, mit der parasitäre Änderungen der Impedanz des Feuchtesensors auf einfache Weise kompensiert werden können.

Diese Aufgabe wird gelöst durch eine Schaltungsanordnung zur Messung der Luftfeuchtigkeit nach Anspruch 1. Vorteilhafte Details der Schaltungsanordnung ergeben sich aus den von Anspruch 1 abhängigen Ansprüchen.

Weiter ist es Aufgabe der Erfindung, ein Verfahren zur Messung der Luftfeuchtigkeit mit einer erfindungsgemäßen Schaltungsanordnung anzugeben, mit dem parasitäre Änderungen der Impedanz der Feuchtesensoren auf einfache Weise kompensiert werden können.

Diese Aufgabe wird gelöst durch ein Verfahren nach Anspruch 6. Vorteilhafte Details des Verfahrens ergeben sich aus den von Anspruch 6 abhängigen Ansprüchen.

Es wird nun eine Schaltungsanordnung vorgeschlagen, mit einer Messanordnung, die eine Oszillatoreinheit und eine Signalverarbeitungseinheit umfasst, sowie einer frequenzbestimmenden Impedanz, die weitgehend durch eine Parallelschaltung eines kapazitiven Feuchtesensors und eines parasitären Widerstands bestimmt ist. Die frequenzbestimmende Impedanz ist an die Oszillatoreinheit angeschlossen, die einen Oszillator enthält, dessen Schwingungsfrequenz von der frequenzbestimmenden Impedanz abhängt. Die Oszillatoreinheit enthält eine schaltbare Impedanz, die zur frequenzbestimmenden Impedanz hinzugeschaltet werden kann, wodurch der Oszillator von einem ersten Frequenzbereich in einen zweiten Frequenzbereich umschaltbar ist. Ein Oszillatorsignal mit der Schwingungsfrequenz des Oszillators ist der Signalverarbeitungseinheit zugeführt, in der die Frequenz des Oszillatorsignals messbar und ein Korrekturwert zur Kompensation des Einflusses des parasitären Parallelwiderstandes auf die Schwingungsfrequenz des Oszillators in Abhängigkeit von der Differenz einer ersten Messung der Frequenz des Oszillatorsignals im ersten Frequenzbereich und einer zweiten Messung der Frequenz des Oszillatorsignals im zweiten Frequenzbereich ermittelbar ist.

Besonders vorteilhaft ist es, wenn das Hinzuschalten der schaltbaren Impedanz durch eine Parallelschaltung eines Referenzkondensators zur frequenzbestimmenden Impedanz realisiert wird, da in diesem Fall der Einfluss des parasitären Widerstands auf die Schwingungsfrequenz des Oszillators steigt, was dazu führt, dass sich die Differenz der ersten Messung der Frequenz des Oszillatorsignals im ersten Frequenzbereich und der zweiten Messung der Frequenz des Oszillatorsignals im zweiten Frequenzbereich vergrößert. Dadurch wird die Genauigkeit bei der Ermittlung des Korrekturwerts erhöht.

Weitere Vorteile sowie Einzelheiten der vorliegenden Erfindung ergeben sich aus der nachfolgenden Beschreibung eines bevorzugten Verfahrens zur Messung der Luftfeuchtigkeit anhand der Figuren. Dabei zeigt
Figur 1 ein Blockdiagramm einer erfindungsgemäßen Schaltungsanordnung zur Messung der Luftfeuchtigkeit,
Figur 2 ein vereinfachtes Schaltbild einer bevorzugten Ausführungsform einer erfindungsgemäßen Schaltungsanordnung zur Messung der Luftfeuchtigkeit,
Figur 3 ein Ablaufdiagramm eines erfindungsgemäßen Verfahrens zur Messung der Luftfeuchtigkeit und
Figur 4 Kennlinien zur Veranschaulichung des Einflusses eines parasitären Widerstands auf die Periodendauer des Oszillatorsignals einer erfindungsgemäßen Schaltungsanordnung nach Figur 2.

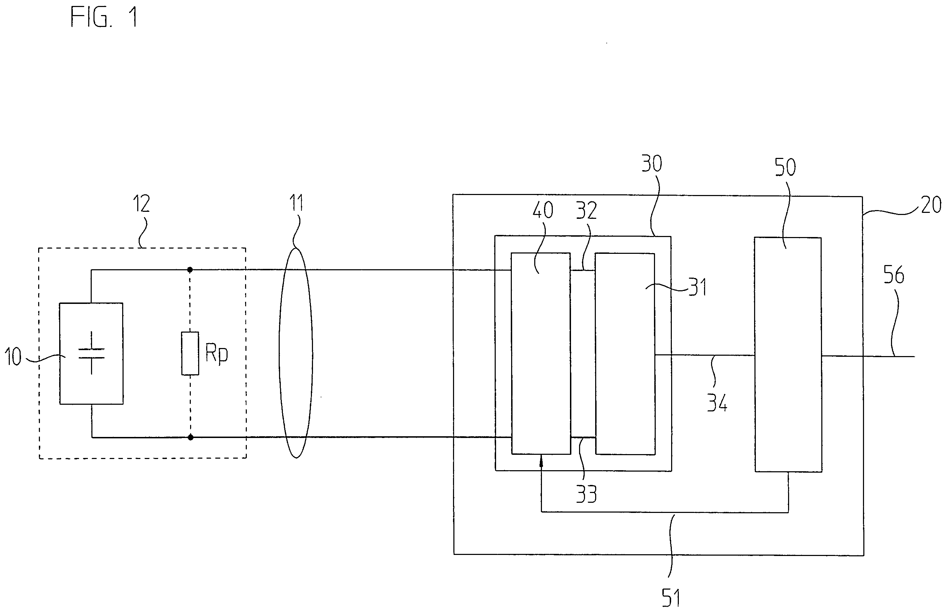

Figur 1 zeigt ein Blockdiagramm einer erfindungsgemäßen Vorrichtung zur Feuchtemessung. Ein kapazitiver Feuchtesensor 10 ist über ein Verbindungskabel 11 an eine Oszillatoreinheit 30 in einer Messanordnung 20 angeschlossen. Die Oszillatoreinheit 30 umfasst eine schaltbare Impedanz 40 und einen Oszillator 31. Der Oszillator 31 ist so aufgebaut, dass seine Schwingungsfrequenz von der Impedanz, insbesondere der Kapazität, bestimmt wird, die an Eingänge 32, 33 des Oszillators 31 angeschlossen ist. Durch hinzuschalten der schaltbaren Impedanz an die Eingänge 32, 33 des Oszillators 31 ist dieser von einem ersten Frequenzbereich in einen zweiten Frequenzbereich umschaltbar.

Die Messanordnung 20 umfasst weiter eine Signalverarbeitungseinheit 50, der ein Oszillatorsignal 34 mit der Schwingungsfrequenz des Oszillators 31 zugeführt ist. Die Signalverarbeitungseinheit 50 enthält Mittel, um die Frequenz des Oszillatorsignals 34 zu messen und aus dem Ergebnis einen Feuchtewert 56 zu ermitteln. Der Feuchtewert 56 wird von der Messanordnung 20 zur weiteren Verarbeitung beispielsweise an ein Klimagerät zur Steuerung des Raumklimas, oder an eine Anzeigeeinheit zur Anzeige des Feuchtewerts 56, ausgegeben.

Bei einem idealen Aufbau ist die Schwingungsfrequenz des Oszillators 31, neben dem Schaltzustand der schaltbaren Impedanz 40, nur von der Kapazität des kapazitiven Feuchtesensors 10 abhängig, die sich wiederum in Abhängigkeit von der Luftfeuchtigkeit ändert. Das heißt, durch Messung der Frequenz des Oszillatorsignals 34 in der Signalverarbeitungseinheit 50 kann die Kapazität des kapazitiven Feuchtesensors 10 und somit der aktuelle Wert der Luftfeuchtigkeit bestimmt werden.

In der Praxis befindet sich jedoch parallel zum kapazitiven Feuchtesensor 10 ein parasitärer Widerstand R_{P}, der zusammen mit dem kapazitiven Feuchtesensor 10 eine frequenzbestimmende Impedanz 12 bildet, die die Schwingungsfrequenz des Oszillators 31 beeinflusst. Der parasitäre Widerstand R_{P} ist prinzipiell immer vorhanden, etwa in Form von Isolationswiderständen, die beispielsweise im Verbindungskabel 11, oder aber zwischen den Anschlüssen des kapazitiven Feuchtesensors 10, oder auch zwischen Anschlussklemmen, bzw. Steckerpins an der Messanordnung 20 auftreten. Im ungestörten Betrieb und bei fehlerfreiem Aufbau ist der parasitäre Widerstand R_{P} normalerweise so hochohmig (> 10MOhm), dass er für viele Anwendungen vernachlässigt werden kann. In rauen Industrieumgebungen kommt es aber häufig vor, dass der parasitäre Widerstand R_{P} durch Verschmutzung, beispielsweise durch Staubablagerungen zwischen den Kontakten des kapazitiven Feuchtesensors 10, oft auch in Verbindung mit Feuchtigkeit etc., im Laufe der Zeit niederohmiger wird, bis er schließlich die Schwingungsfrequenz des Oszillators 31 und damit das Messergebnis merklich beeinflusst und zu Fehlmessungen führt. In der Praxis bewirkt der parasitäre Widerstand R_{P} eine Verringerung der Schwingungsfrequenz des Oszillators 31, da sich durch ihn der Ladestrom des kapazitiven Feuchtesensors 10 verringert, bzw. sich seine Ladezeit erhöht.

Über die Schaltleitung 51 kann nun der Oszillator 31 von der Signalverarbeitungseinheit 50 durch hinzuschalten der schaltbaren Impedanz 40 zur frequenzbestimmenden Impedanz 12 von einem ersten Frequenzbereich in einen zweiten Frequenzbereich umgeschaltet werden. Da sich der Einfluss des parasitären Widerstands R_{P}, also die vom parasitären Widerstand R_{P} bedingte Verringerung der Schwingungsfrequenz des Oszillators 31, im ersten Frequenzbereich und im zweiten Frequenzbereich unterschiedlich auswirkt, kann er aufgrund der Differenz einer ersten Messung der Frequenz des Oszillatorsignals 34 im ersten Frequenzbereich des Oszillators 31 und einer zweiten Messung des Oszillatorsignals 34 im zweiten Frequenzbereich von der Signalverarbeitungseinheit 50 kompensiert werden.

Dabei ist es besonders vorteilhaft, wenn die schaltbare Impedanz 40 weitgehend kapazitiv ist und das Hinzuschalten dadurch erfolgt, dass sie parallel zur frequenzbestimmenden Impedanz 12 geschaltet wird. Dadurch wird die Gesamtkapazität vergrößert, was zum einen dazu führt, dass sich die Gesamtladezeit der Kapazitäten erhöht und sich als Folge die Schwingungsfrequenz des Oszillators 31 im zweiten Frequenzbereich verringert und zum anderen, dass sich der Einfluss des parasitären Widerstands R_{P} stärker auswirkt. Als Folge davon kann die Differenz aus den beiden Messungen mit höherer Genauigkeit bestimmt werden.

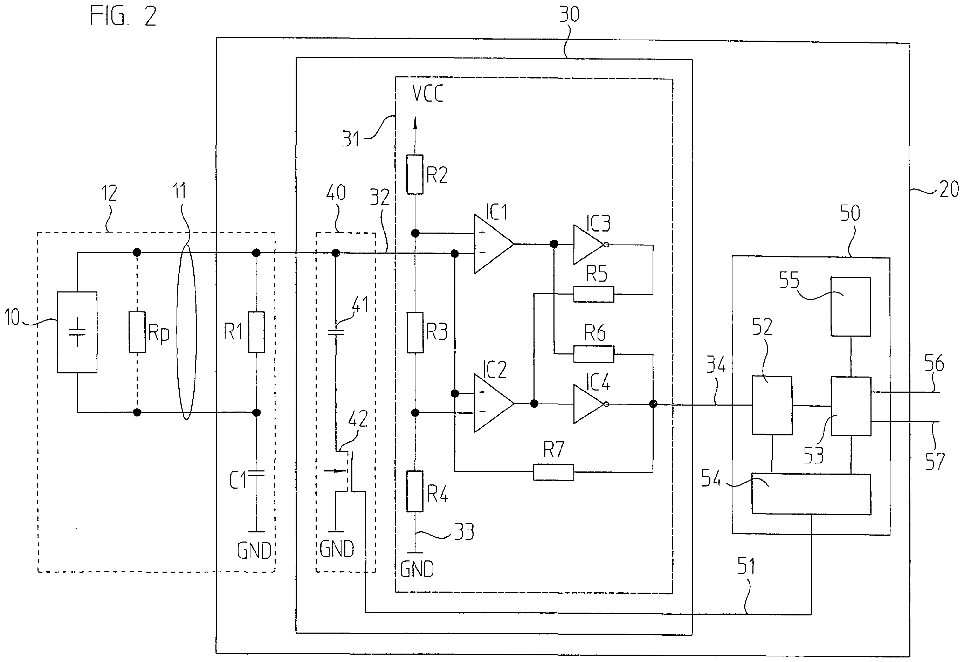

Figur 2 zeigt ein vereinfachtes Schaltbild einer erfindungsgemäßen Schaltungsanordnung zur Messung der Luftfeuchtigkeit. Bereits in Figur 1 beschriebene Komponenten tragen in Figur 2 das selbe Bezugszeichen.

Der kapazitive Sensor 10 mit dem parallel geschalteten parasitären Widerstand R_{P} ist über das Verbindungskabel 11 an die Messanordnung 20 angeschlossen. Ein Anschluss des kapazitiven Sensors 10 ist dabei direkt mit dem schwingungsaktiven Eingang 32 des Oszillators 31 verbunden. Der zweite Anschluss des kapazitiven Sensors ist dagegen über einen Koppelkondensator C1 an den zweiten Eingang 33 des Oszillators 31 angeschlossen, der in diesem Beispiel identisch mit dem Bezugspunkt GND der Schaltung des Oszillators 31 ist. Der Koppelkondensator weist im Vergleich zum kapazitiven Feuchtesensor 10 eine hohe Kapazität auf, mit Vorteil mehr als das 100-fache des Kapazitätswertes des kapazitiven Feuchtesensors 10. Aufgabe dieses Koppelkondensators C1 ist es, den Gleichspannungsanteil am kapazitiven Feuchtesensor 10 zu reduzieren. Um zu verhindern, dass sich der Koppelkondensator C1 über den kapazitiven Feuchtesensor 10 laden, bzw. entladen muss, ist zusätzlich ein Ladewiderstand R1 vorgesehen, der parallel zum kapazitiven Feuchtesensor 10 angeschlossen ist. Der Wert des Ladewiderstands R1 ist hochohmig, beispielsweise im Bereich von 10 MOhm. Die frequenzbestimmende Impedanz 12 bilden somit in diesem Beispiel der kapazitive Feuchtesensor 10, der parasitäre Widerstand R_{P}, der Koppelkondensator C1 und der Ladewiderstand R1. Der Koppelkondensator C1 und der Ladewiderstand R1 können jedoch vernachlässigt werden, da sie aufgrund ihrer Dimensionierung praktisch keinen Einfluss auf die Schwingungsfrequenz des Oszillators 31 haben.

Der Oszillator 31 in der Oszillatoreinheit 30 besteht in diesem Beispiel aus den Widerständen R2-R7, sowie zwei Operationsverstärkern IC1, IC2 und zwei digitalen Inverterbausteinen IC3, IC4. Derartige Oszillatorschaltungen, auch als astabile Kippstufen bezeichnet, sind bekannt, daher wird die verwendete Schaltung nicht weiter beschrieben. Als Alternative zur dargestellten Schaltung könnte auch ein integrierter Timerbaustein, z.B. der weit verbreitete Timer 555 (je nach Hersteller beispielsweise unter der Typenbezeichnung LMC555, NE555, TLC555 bekannt), mit entsprechender Zusatzbeschaltung zur Einsatz kommen. Mit Vorteil ist der Oszillator 31 so eingestellt, dass er bei einem mittleren Feuchtigkeitswert eine Grundfrequenz zwischen 10kHz und 1 MHz aufweist, die sich über den zu messenden Feuchtebereich, bzw. über den Kapazitätsbereich des kapazitiven Feuchtesensors 10, ausreichend stark ändert, dass eine zuverlässige Erfassung der Luftfeuchtigkeit in Abhängigkeit von der Kapazität des kapazitiven Feuchtesensors 10 möglich ist. Variiert die Kapazität eines kapazitiven Feuchtesensors 10 in einem zu messenden Feuchtebereich von 0% bis 100% RH beispielsweise zwischen 390pF und 540pF, so ist eine Änderung der Oszillatorfrequenz von ca. 55kHz bei 0% Luftfeuchtigkeit auf ca. 40kHz bei 100% Luftfeuchtigkeit als besonders günstig anzusehen.

Die schaltbare Impedanz 40 besteht im vorliegenden Ausführungsbeispiel aus einem Referenzkondensator 41, der über ein Schaltelement 42 zwischen den schwingungsaktiven Eingang 32 und den Bezugspunkt GND des Oszillators 31 geschaltet werden kann. Die Betätigung des Schaltelements 42 erfolgt dabei über die Schaltleitung 51 von der Signalverarbeitungseinheit 50. Das Einschalten des Schaltelements 42 bewirkt eine Parallelschaltung des Referenzkondensators 41 zur frequenzbestimmenden Impedanz 12, insbesondere mit dem kapazitiven Feuchtesensor 10. Als Folge davon sinkt die Schwingungsfrequenz des Oszillators 31.

Als Schaltelement 42 ist in diesem Ausführungsbeispiel ein MOSFET eingesetzt. Das ist besonders vorteilhaft, weil der Strom, der zum Einschalten des MOSFET vernachlässigbar gering ist. In anderen Varianten, etwa wenn für das Schaltelement 42 ein potentialfreier Kontakt gefordert ist, kann als Schaltelement 42 beispielsweise ein Relais zum Einsatz kommen.

Das Oszillatorsignal 34 ist einer Messeinheit 52 in der Signalverarbeitungseinheit 50 zugeführt, mit der die Frequenz des Oszillatorsignals 34 messbar ist. An dieser Stelle sei darauf hingewiesen, dass an Stelle der Frequenz selbstverständlich auch die Periodendauer des Oszillatorsignals 34 gemessen werden kann. Das Ergebnis der Messung wird an eine Auswerteeinheit 53 ausgegeben, die aus Frequenzwerten Feuchtewerte 56 ermittelt und ausgibt. Die Auswerteeinheit 53 ist hierzu mit einem Korrekturwertspeicher 55 verbunden, der in Abhängigkeit von der Differenz von Messwerten im ersten Frequenzbereich und im zweiten Frequenzbereich des Oszillators 31 Korrekturwerte enthält, die geeignet sind, den Einfluss des parasitären Widerstands R_{P} auf die Schwingungsfrequenz des Oszillators 31 zu kompensieren.

Die Steuerung des Messvorgangs erfolgt durch eine Steuereinheit 54, die über die Schaltleitung 51 den Frequenzbereich der Oszillatoreinheit 30 bestimmt und die Messung und Auswertung des Oszillatorsignals 34 initiiert.

Die Korrekturwerte können beispielsweise bei der Fertigung der Schaltungsanordnung in einem Kalibrierlauf bei einem idealen Aufbau ermittelt werden, bei dem der parasitäre Widerstand R_{P} durch bekannte Widerstandswerte simuliert und sein Einfluss auf die Schwingungsfrequenz des Oszillators 31 in den beiden Frequenzbereichen aufgezeichnet wird. Wird beim Kalibrierlauf darüber hinaus auch noch die Luftfeuchtigkeit variiert, können den gemessenen Oszillatorfrequenzen gleich Feuchtewerte 56 zugeordnet werden. In diesem Fall können den Korrekturwerte erzeugt werden, die neben der Kompensation des Einflusses des parasitären Widerstands R_{P} bereits Umrechnungsfaktoren zur Umrechnung der gemessenen Frequenz- oder Periodendauerwerte in Feuchtewerte 56 enthalten.

Da es sich bei der Signalverarbeitungseinheit 50 um eine rein digitale Schaltung handelt, ist sie besonders dazu geeignet, in einen komplexen digitalen Baustein, wie z.B. ein FPGA (field programmable gate array) oder einen ASIC (application specific integrated circuit) integriert zu werden. Ebenso ist es besonders vorteilhaft, als Signalverarbeitungseinheit 50 einen Mikrocontroller einzusetzen.

Weiter ist es möglich, den Oszillator 31 und die Signalverarbeitungseinheit 50 zusammen in einem anwenderspezifischen Baustein zu integrieren oder mit einem Mikrocontroller zu realisieren.

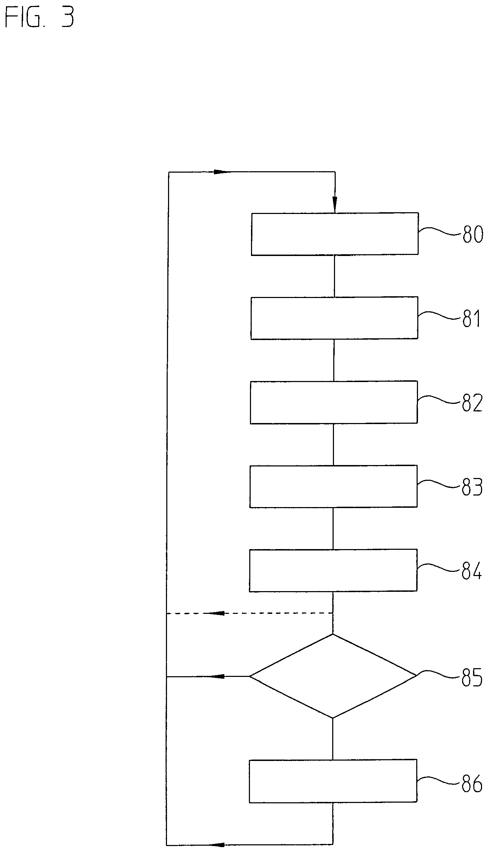

Anhand des in Figur 3 dargestellten Ablaufdiagramms soll nun ein erfindungsgemäßes Verfahren zur Messung der Luftfeuchtigkeit beschrieben werden.

In einem Schritt 80 initiiert die Steuereinheit 54 eine Messung der Frequenz des Oszillatorsignals 34 im ersten Frequenzbereich des Oszillators 31 mit der Messeinheit 52. Das Ergebnis der Messung wird an die Auswerteeinheit 53 weitergeleitet.

In einem Schritt 81 schaltet die Steuereinheit 54 über die Schaltleitung 51 den Oszillator 31 durch hinzuschalten der schaltbaren Impedanz 40 zum kapazitiven Feuchtesensor 10, in den zweiten Frequenzbereich des Oszillators 31. Im Beispiel von Figur 2 wird das durch Parallelschaltung des Referenzkondensators 41 mit dem Schaltelement 42 zur frequenzbestimmenden Impedanz 12 erreicht.

In einem Schritt 82 initiiert die Steuereinheit 54 eine zweite Messung der Frequenz des Oszillatorsignals 34 im zweiten Frequenzbereich des Oszillators 31 mit der Messeinheit 52. Auch das zweite Ergebnis wird an die Auswerteeinheit 53 ausgegeben.

In Schritt 83 bildet die Auswerteeinheit 53 die Differenz aus den beiden Messwerten und holt in Abhängigkeit vom Ergebnis aus dem Korrekturwertspeicher 55 einen Korrekturwert, der den Einfluss des parasitären Widerstands R_{P} auf die Frequenz des Oszillatorsignals 34 bewirkt, kompensieren kann. Je nachdem, wie der Korrekturwertspeicher 55 ausgebildet ist, kann es sich bei dem Korrekturwert beispielsweise um einen Tabellenwert oder um einen oder mehrere Koeffizienten für eine mathematische Formel handeln. Wie bereits beschrieben, enthält der Korrekturwert mit Vorteil bereits einen Umrechnungsfaktor zur Ermittlung eines Feuchtewertes 56 aus der Frequenz des Oszillatorsignals 34. Für den Fachmann ist es offensichtlich, dass sowohl das Ergebnis der ersten Messung der Frequenz des Oszillatorsignals 34, als auch das Ergebnis der zweiten Messung der Frequenz des Oszillatorsignals 34 zur Ermittlung des Feuchtewertes 56 geeignet ist.

In Schritt 84 wendet die Auswerteeinheit 53 den ermittelten Korrekturwert auf das Ergebnis der ersten Messung des Oszillatorsignals 34, oder das Ergebnis der zweiten Messung des Oszillatorsignals 34 an und ermittelt in Abhängigkeit vom korrigierten Messwert einen korrespondierenden Feuchtewert 56.

Wie bereits beschrieben, kommt der parasitäre Widerstand R_{P} unter anderem durch Verschmutzungseffekte zustande, die beim Betrieb der Schaltungsanordnung zur Messung der Luftfeuchtigkeit in einer rauen Industrieumgebung auftreten. Dabei sinkt der Wert des parasitären Widerstands R_{P} im Laufe der Zeit, bis er schließlich das Messergebnis beeinflusst. Dabei kann es vorkommen, dass der Wert des parasitären Widerstands R_{P} mit der Zeit so niederohmig wird, dass sein Einfluss auf das Messergebnis nicht mehr kompensierbar ist, bzw. bis der Oszillator nicht mehr arbeitet. Um einem derartigen Ausfall der Schaltungsanordnung vorzubeugen, ist es besonders vorteilhaft, wenn die Auswerteeinheit 53 in einem Schritt 85 die in Schritt 83 ermittelte Differenz aus den beiden Messwerten mit einem Grenzwert, der einem gerade noch tolerierbaren Minimalwert des parasitären Widerstands R_{P} entspricht, vergleicht und bei Unterschreiten des Minimalwertes in einem Schritt 86 ein Warnsignal 57 ausgibt, das anzeigt, dass ein Ausfall der Schaltungsanordnung unmittelbar bevorsteht. Dieses Signal kann dann dazu genutzt werden, eine vorbeugende Wartung der Schaltungsanordnung, etwa durch Reinigung der Anschlusskontakte oder durch Austausch des kapazitiven Feuchtesensors 10, vorzunehmen.

Die Änderung des parasitären Widerstands R_{P} ist in der Regel ein langsamer Prozess. Daher kann es vorteilhaft sein, wenn nicht bei jeder Messung eines Feuchtewertes 56 eine Messung der Frequenz des Oszillatorsignals 34 sowohl im ersten als auch im zweiten Frequenzbereich des Oszillators 31 vorgenommen wird, sondern ein einmal ermittelter Korrekturwert für einen bestimmten Zeitraum zur Kompensation des parasitären Widerstands R_{P} verwendet wird. Dadurch wird insbesondere die Zahl der Schaltvorgänge des Schaltelements 42 reduziert. Ist dieses in Form eines mechanischen Kontakts, beispielsweise als Relaiskontakt, ausgeführt, kann dadurch die Lebensdauer auf einfache Weise erhöht werden.

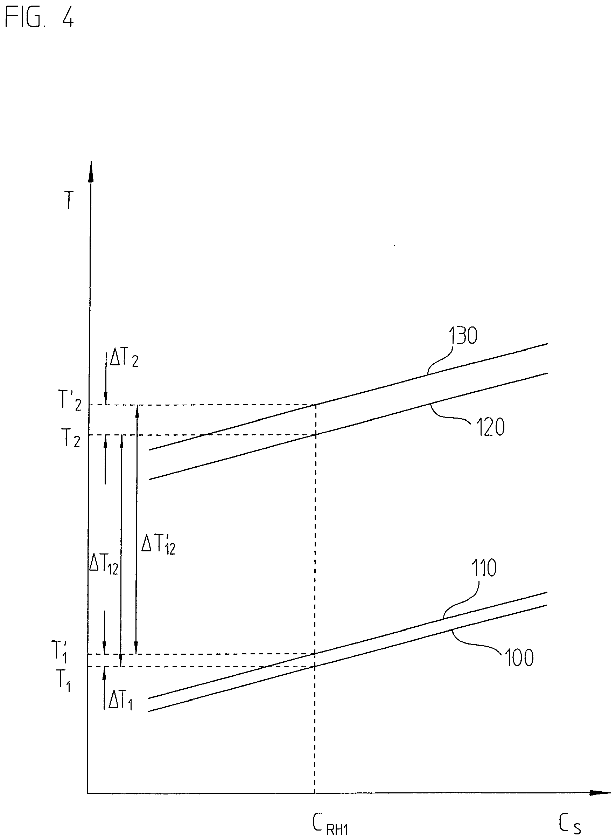

Figur 4 zeigt beispielhaft den Verlauf der Periodendauer T des Oszillatorsignals 34 in Abhängigkeit von der Kapazität C_{S} des kapazitiven Feuchtesensors 10, vom parasitären Widerstand R_{P} und vom Schaltzustand der schaltbaren Impedanz 40. Aufgrund des bekannten Zusammenhangs, dass die Periodendauer T durch Bildung des Kehrwerts in eine Frequenz umgerechnet werden kann, sind die folgenden Betrachtungen selbstverständlich auch auf die Frequenz des Oszillatorsignals 34 und somit auf die oben beschriebenen Ausführungsbeispiele anwendbar.

Eine erste Kennlinie 100 zeigt den Verlauf der Periodendauer T bei einem idealen Aufbau, also ohne, bzw. sehr hochohmigen parasitären Widerstand R_{P} und im ersten Frequenzbereich des Oszillators 31. Eine zweite Kennlinie 110 veranschaulicht, wie die erste Kennlinie 100 durch den Einfluss des parasitären Widerstands R_{P} in Richtung längerer Periodendauern T verschoben wird.

Eine dritte Kennlinie 120 zeigt wiederum den Verlauf der Periodendauer T bei einem idealen Aufbau, dieses Mal aber im zweiten Frequenzbereich, also bei hinzugeschalteter schaltbarer Impedanz 40. In diesem Fall wurde das Hinzuschalten entsprechend dem Ausführungsbeispiel von Figur 2 durch Parallelschaltung eines Referenzkondensators 41 zur frequenzbestimmenden Impedanz 12 realisiert. Da sich dadurch die Kapazitäten des Referenzkondensators 41 und des kapazitiven Feuchtesensors 10 addieren und sich dadurch eine längere Ladezeit der Kapazitäten ergibt, ist die dritte Kennlinie 120 gegenüber der ersten Kennlinie 100 nach oben, also in Richtung größerer Periodendauern T verschoben. Aus einer vierten Kennlinie 130 ist schließlich der Einfluss des parasitären Widerstands R_{P} auf die dritte Kennlinie 120 ersichtlich. Es wird angenommen, dass der parasitäre Widerstand R_{P} den selben Wert hat, der auch die Verschiebung von der ersten Kennlinie 100 zur zweiten Kennlinie 110 bewirkt. Die Addition der Kapazitäten führt jedoch dazu, dass sich der parasitäre Widerstand R_{P} jetzt stärker auswirkt.

Dieser Effekt ist in Figur 4 noch einmal beispielhaft bei einem beliebigen Wert CRH1 des kapazitiven Feuchtesensors 10 dargestellt. Eine Messung der Periodendauer T im ersten Frequenzbereich des Oszillators 31 ohne Einfluss des parasitären Widerstands R_{P} ergibt einen Wert T1. Der parasitäre Widerstand R_{P} führt zu einer Erhöhung der Periodendauer T des Oszillators 31 auf den Wert T1'. Es ergibt sich ein Messfehler ΔT1. Im zweiten Frequenzbereich des Oszillators 31 ergibt sich dagegen durch den Einfluss des parasitären Widerstands R_{P} eine Verschiebung der Periodendauer T von einem Wert T2 auf einen Wert T2', was zu einem Messfehler ΔT2 führt.

Anders betrachtet führt eine Umschaltung vom ersten Frequenzbereich zum zweiten Frequenzbereich des Oszillators 31 bei einem idealen Aufbau zu einer Änderung der Periodendauer T um einen idealen Wert ΔT12, der sich in Abhängigkeit vom parasitären Widerstand R_{P} auf einen fehlerbehafteten Wert ΔT12' ändert.

Aufgrund dieses bekannten Zusammenhangs ist es nun möglich, Korrekturwerte in Abhängigkeit vom fehlerbehafteten Wert ΔT12', bzw. der Differenz zwischen dem fehlerbehafteten Wert ΔT12' und dem idealen Wert ΔT12 zu ermitteln, mit denen der Einfluss des parasitären Widerstands R_{P} kompensierbar ist.

## Patentansprüche

1. Schaltungsanordnung zur Messung der Luftfeuchtigkeit, bestehend aus einer Messanordnung (20), die eine Oszillatoreinheit (30) und eine Signalverarbeitungseinheit (50) umfasst, sowie einer frequenzbestimmenden Impedanz (12), die weitgehend durch eine Parallelschaltung eines kapazitiven Feuchtesensors (10) und eines parasitären Widerstands (R_{P}) bestimmt ist, wobei
- die frequenzbestimmende Impedanz (12) an die Oszillatoreinheit (30) angeschlossen ist, die einen Oszillator (31) enthält, dessen Schwingungsfrequenz von der frequenzbestimmenden Impedanz (12) abhängt,
- die Oszillatoreinheit (30) eine schaltbare Impedanz (40) enthält und der Oszillator (31) durch hinzuschalten der schaltbaren Impedanz (40) zur frequenzbestimmenden Impedanz (12) von einem ersten Frequenzbereich in einen zweiten Frequenzbereich umschaltbar ist und
- ein Oszillatorsignal (34) mit der Schwingungsfrequenz des Oszillators (31) der Signalverarbeitungseinheit (50) zugeführt ist, die eine Messeinheit (52), einen Korrekturwertspeicher (55) und eine Auswerteeinheit (53) umfasst, wobei die Frequenz des Oszillatorsignals (34) in der Messeinheit (52) messbar ist, ein Korrekturwert zur Kompensation des Einflusses des parasitären Parallelwiderstandes (R_{P}) auf die Schwingungsfrequenz des Oszillators (31) in Abhängigkeit von der Differenz einer ersten Messung der Frequenz des Oszillatorsignals (34) im ersten Frequenzbereich und einer zweiten Messung der Frequenz des Oszillatorsignals (34) im zweiten Frequenzbereich aus dem Korrekturwertspeicher (55) ermittelbar ist und in der Auswerteeinheit (53) die Frequenz des Oszillatorsignals (34) mit dem Korrekturwert zu einem Feuchtewert (56) verarbeitbar ist.

2. Schaltungsanordnung nach Anspruch 1, wobei die Signalverarbeitungseinheit (50) weiter eine Steuereinheit (54) zur Steuerung des Messablaufs umfasst.

3. Schaltungsanordnung nach einem der Ansprüche 1 oder 2, wobei die schaltbare Impedanz (40) einen Referenzkondensator (41) und ein Schaltelement (42) umfasst und das Umschalten des Oszillators (31) in den zweiten Frequenzbereich durch Parallelschaltung des Referenzkondensators (41) zur frequenzbestimmenden Impedanz (12) durch einschalten des Schaltelements (42) erfolgt.

4. Schaltungsanordnung nach Anspruch 3, wobei das Schaltelement (42) über eine Schaltleitung (51) von der Steuereinheit (54) in der Signalverarbeitungseinheit (50) einschaltbar ist.

5. Schaltungsanordnung nach einem der vorhergehenden Ansprüche, wobei die Signalverarbeitungseinheit (50) als FPGA, ASIC oder Mikrocontroller ausgeführt ist.

6. Verfahren zur Messung der Luftfeuchtigkeit mit einer Schaltungsanordnung nach Anspruch 1, mit folgenden Schritten:
a) Durchführung einer ersten Messung der Frequenz des Oszillatorsignals (34) im ersten Frequenzbereich des Oszillators (31) in der Signalverarbeitungseinheit (50),
b) Umschaltung des Oszillators (31) vom ersten Frequenzbereich in den zweiten Frequenzbereich durch hinzuschalten der schaltbaren Impedanz (40) zur frequenzbestimmenden Impedanz (12),
c) Durchführung einer zweiten Messung der Frequenz des Oszillatorsignals (34) im zweiten Frequenzbereich des Oszillators (31) in der Signalverarbeitungseinheit (50),
d) Ermittlung eines Korrekturwertes zur Kompensation des Einflusses des parasitären Widerstands (R_{P}) auf die Frequenz des Oszillatorsignals (34) in Abhängigkeit von der Differenz aus der ersten Messung und der zweiten Messung und
e) Verarbeitung des Ergebnisses der ersten Messung oder des Ergebnisses der zweiten Messung mit Hilfe des ermittelten Korrekturwerts zu einem Feuchtewert (56).

7. Verfahren nach Anspruch 6, wobei die Messung der Frequenz des Oszillatorsignals (34) in der Signalverarbeitungseinheit (50) mit einer Messeinheit (52) erfolgt und das Ergebnis der Messung an eine Auswerteeinheit (53) ausgegeben wird.

8. Verfahren nach einem der Ansprüche 6 oder 7, wobei die Auswerteeinheit (53) die Differenz aus der ersten Messung und der zweiten Messung bildet und in Abhängigkeit vom Ergebnis den Korrekturwert aus einem Korrekturwertspeicher (55) holt.

9. Verfahren nach einem der Ansprüche 6 bis 8, wobei die Steuerung des Messablaufs von einer Steuereinheit (54) in der Signalverarbeitungseinheit (50) erfolgt.

10. Verfahren nach einem der Ansprüche 6 bis 9, wobei die schaltbare Impedanz (40) einen Referenzkondensator (41) und ein Schaltelement (42) umfasst und das Umschalten des Oszillators (31) in den zweiten Frequenzbereich durch Einschalten des Schaltelements (42) über eine Schaltleitung (51) von der Steuereinheit (54) erfolgt.

11. Verfahren nach Anspruch 10, wobei das Einschalten des Schaltelements (42) eine Parallelschaltung des Referenzkondensators (41) zur frequenzbestimmenden Impedanz (12) bewirkt.

12. Verfahren nach einem der Ansprüche 6 oder 7, wobei ein Warnsignal (57) generiert wird, wenn der Einfluss des parasitären Widerstands (R_{P}) auf die Frequenz des Oszillatorsignals (34) einen Grenzwert überschreitet.

## Claims

1. Circuit arrangement for measuring the air humidity, consisting of a measuring arrangement (20), which comprises an oscillator unit (30) and a signal processing unit (50), and a frequency-determining impedance (12) which is largely determined by a parallel circuit of a capacitive moisture sensor (10) and a parasitic resistor (R_{P}),
- the frequency-determining impedance (12) being connected to the oscillator unit (30) which contains an oscillator (31), the oscillation frequency of which depends on the frequency-determining impedance (12),
- the oscillator unit (30) containing a switchable impedance (40), and the oscillator (31) being able to be changed over from a first frequency range to a second frequency range by additionally connecting the switchable impedance (40) to the frequency-determining impedance (12), and
- an oscillator signal (34) at the oscillation frequency of the oscillator (31) being supplied to the signal processing unit (50) which comprises a measuring unit (52), a correction value memory (55) and an evaluation unit (53), the frequency of the oscillator signal (34) being able to be measured in the measuring unit (52), a correction value for compensating for the influence of the parasitic parallel resistor (R_{P}) on the oscillation frequency of the oscillator (31) being able to be determined from the correction value memory (55) on the basis of the difference between a first measurement of the frequency of the oscillator signal (34) in the first frequency range and a second measurement of the frequency of the oscillator signal (34) in the second frequency range, and the frequency of the oscillator signal (34) being able to be processed in the evaluation unit (53) with the correction value to form a moisture value (56).

2. Circuit arrangement according to Claim 1, the signal processing unit (50) also comprising a control unit (54) for controlling the measurement sequence.

3. Circuit arrangement according to either of Claims 1 and 2, the switchable impedance (40) comprising a reference capacitor (41) and a switching element (42), and the changing-over of the oscillator (31) to the second frequency range by connecting the reference capacitor (41) in parallel with the frequency-determining impedance (12) being carried out by switching on the switching element (42).

4. Circuit arrangement according to Claim 3, the switching element (42) being able to be switched on by the control unit (54) in the signal processing unit (50) via a switching line (51).

5. Circuit arrangement according to one of the preceding claims, the signal processing unit (50) being in the form of an FPGA, an ASIC or a microcontroller.

6. Method for measuring the air humidity using a circuit arrangement according to Claim 1, having the following steps of:
a) carrying out a first measurement of the frequency of the oscillator signal (34) in the first frequency range of the oscillator (31) in the signal processing unit (50),
b) changing over the oscillator (31) from the first frequency range to the second frequency range by additionally connecting the switchable impedance (40) to the frequency-determining impedance (12),
c) carrying out a second measurement of the frequency of the oscillator signal (34) in the second frequency range of the oscillator (31) in the signal processing unit (50),
d) determining a correction value for compensating for the influence of the parasitic resistor (R_{P}) on the frequency of the oscillator signal (34) on the basis of the difference between the first measurement and the second measurement, and
e) processing the result of the first measurement or the result of the second measurement with the aid of the determined correction value to form a moisture value (56).

7. Method according to Claim 6, the frequency of the oscillator signal (34) being measured in the signal processing unit (50) using a measuring unit (52), and the result of the measurement being output to an evaluation unit (53).

8. Method according to either of Claims 6 and 7, the evaluation unit (53) forming the difference between the first measurement and the second measurement and fetching the correction value from a correction value memory (55) on the basis of the result.

9. Method according to one of Claims 6 to 8, the measurement sequence being controlled by a control unit (54) in the signal processing unit (50).

10. Method according to one of Claims 6 to 9, the switchable impedance (40) comprising a reference capacitor (41) and a switching element (42), and the oscillator (31) being changed over to the second frequency range by the control unit (54) by switching on the switching element (42) via a switching line (51).

11. Method according to Claim 10, the switching-on of the switching element (42) causing the reference capacitor (41) to be connected in parallel with the frequency-determining impedance (12).

12. Method according to either of Claims 6 and 7, a warning signal (57) being generated if the influence of the parasitic resistor (R_{P}) on the frequency of the oscillator signal (34) exceeds a limit value.

## Revendications

1. Système de circuit destiné à mesurer l'humidité de l'air, constitué d'un système de mesure (20), qui comprend une unité à oscillateur (30) et une unité de traitement du signal (50), et d'une impédance déterminant la fréquence (12), qui est principalement déterminée par une connexion en parallèle d'un capteur d'humidité capacitif (10) et d'une résistance parasite (Rₚ), dans lequel
- l'impédance déterminant la fréquence (12) est raccordée à l'unité à oscillateur (30), qui contient un oscillateur (31) dont la fréquence d'oscillation dépend de l'impédance déterminant la fréquence (12),
- l'unité à oscillateur (30) contient une impédance commutable (40) et l'oscillateur (31) peut être amené à basculer d'une première plage de fréquences à une deuxième plage de fréquences en connectant l'impédance commutable (40) à l'impédance déterminant la fréquence (12) et
- un signal d'oscillateur (34) présentant le fréquence d'oscillation de l'oscillateur (31) de l'unité de traitement du signal (50) est délivré à une unité de mesure (52) qui comprend une mémoire de valeur de correction (55) et une unité d'évaluation (53), dans lequel la fréquence du signal d'oscillateur (34) peut être mesurée dans l'unité de mesure (52), une valeur de correction destinée à compenser l'effet de la résistance parallèle parasite (Rₚ) sur la fréquence d'oscillation de l'oscillateur (31) en fonction de la différence entre une première mesure de la fréquence du signal d'oscillateur (34) dans la première plage de fréquences et une deuxième mesure de la fréquence du signal d'oscillateur (34) dans la deuxième plage de fréquences peut être obtenue à partir de la mémoire de valeur de correction (55) et la fréquence du signal d'oscillateur (34) peut être traitée dans l'unité d'évaluation (53) avec la valeur de correction pour obtenir une valeur d'humidité (56).

2. Système de circuit selon la revendication 1, dans lequel l'unité de traitement du signal (50) comprend en outre une unité de commande (54) destinée à commander le déroulement de la mesure.

3. Système de circuit selon l'une quelconque des revendications 1 ou 2, dans lequel l'impédance commutable (40) comprend un condensateur de référence (41) et un élément de commutation (42) et le basculement de l'oscillateur (31) dans la deuxième plage de fréquences est effectué par connexion en parallèle du condensateur de référence (41) à l'impédance déterminant la fréquence (12) en connectant l'élément de commutation (42).

4. Système de circuit selon la revendication 3, dans lequel l'élément de commutation (42) peut être connecté dans l'unité de traitement du signal (50) par l'intermédiaire d'une ligne de connexion (51) de l'unité de commande (54).

5. Système de circuit selon l'une quelconque des revendications précédentes, dans lequel l'unité de traitement du signal (50) est réalisée sous la forme d'un FPGA, d'un ASIC ou d'un microcontrôleur.

6. Procédé destiné à mesurer l'humidité de l'air, comportant un système de circuit selon la revendication 1, comprenant les étapes consistant à :
a) effectuer une première mesure de la fréquence du signal d'oscillateur (34) dans la première plage de fréquences de l'oscillateur (31) dans l'unité de traitement du signal (50),
b) faire basculer l'oscillateur (31) de la première plage de fréquences à la deuxième plage de fréquences en connectant l'impédance commutable (40) à l'impédance déterminant la fréquence (12),
c) effectuer une deuxième mesure de la fréquence du signal d'oscillateur (34) dans la deuxième plage de fréquences de l'oscillateur (31) dans l'unité de traitement du signal (50),
d) déterminer une valeur de correction destinée à compenser l'effet de la résistance parasite (Rₚ) sur la fréquence du signal d'oscillateur (34) en fonction de la différence entre la première mesure et la deuxième mesure et
e) traiter le résultat de la première mesure ou le résultat de la deuxième mesure à l'aide de la valeur de correction déterminée pour obtenir une valeur d'humidité (56).

7. Procédé selon la revendication 6, dans lequel la mesure de la fréquence du signal d'oscillateur (34) dans l'unité de traitement du signal (50) est effectuée au moyen d'une unité de mesure (52) et le résultat de la mesure est délivré à une unité d'évaluation (53).

8. Procédé selon l'une quelconque des revendications 6 ou 7, dans lequel l'unité d'évaluation (53) établit la différence entre la première mesure et la deuxième mesure et transmet la valeur de correction à partir d'une mémoire de valeur de correction (55) en fonction du résultat.

9. Procédé selon l'une quelconque des revendications 6 à 8, dans lequel la commande du déroulement de la mesure d'une unité de commande (54) est effectuée dans l'unité de traitement du signal (50).

10. Procédé selon l'une quelconque des revendications 6 à 9, dans lequel l'impédance commutable (40) comprend un condensateur de référence (41) et un élément de commutation (42) et le basculement de l'oscillateur (31) dans la deuxième plage de fréquences est effectué en connectant l'élément de commutation (42) par l'intermédiaire d'une ligne de connexion (51) de l'unité de commande (54).

11. Procédé selon la revendication 10, dans lequel la connexion de l'élément de commutation (42) provoque une connexion en parallèle du condensateur de référence (41) à l'impédance déterminant la fréquence (12).

12. Procédé selon l'une quelconque des revendications 6 ou 7, dans lequel un signal d'alarme (57) est généré lorsque l'effet de la résistance parasite (Rₚ) sur la fréquence du signal d'oscillateur (34) dépasse une valeur limite.
